# DEMANDE DE BREVET EUROPEEN

(11) **EP 1 881 248 A1**
(43) Date de publication de la demande: **23.01.2008**
(21) Numéro de dépôt: 07290907.0
(22) Date de dépôt: 19.07.2007
(51) Int. Cl.: F16K 11/20, F16K 1/30, C12L 9/00, F16L 37/47, F16L 37/44

(54) **Equipement de robinetterie pour composé biphasique**

(30) Priorité: 19.07.2006 FR 0606571
(71) Demandeur: Dehon S.A., 75011 Paris (FR)
(72) Inventeur: Morote, Christophe, 69360 Saint Symphorien d'Ozon (FR)
(74) Mandataire: Bloch, Gérard

(57) **Abrégé**

L'équipement comprend un robinet et des moyens de raccordement à une installation d'utilisation et un clapet anti-retour, le robinet comportant des moyens de distribution de la phase liquide (8), des moyens de distribution de la phase gazeuse (6), un plongeur de transmission de la phase liquide (11) et un raccord mâle (2) agencé pour être raccordé à un raccord femelle (4) de l'équipement destiné à communiquer avec l'installation, les deux raccords formant un raccord dit rapide et le clapet anti-retour étant disposé dans le raccord femelle (4). L'invention s'applique bien au domaine viticole

## Description

L'invention concerne le domaine des robinets pour des conteneurs de composés biphasiques. Ces robinets permettent la vidange ou le remplissage de composé biphasique dans des conteneurs. Des composés biphasiques tels que le dioxyde de soufre ont deux phases qui cohabitent en permanence au sein d'un même conteneur: une phase liquide et une phase gazeuse. Dans le domaine viticole, le dioxyde de soufre est utilisé en grande quantité lors de la vinification. Il inhibe le développement des levures et bactéries, arrêtant ainsi la fermentation au moment voulu et assure une stérilisation du vin. L'introduction de dioxyde de soufre dans une cuve de vin permet de sélectionner les levures car celles nécessaires à la vinification sont plus résistantes au dioxyde de soufre que les autres levures présentes.

La vinification comprend plusieurs opérations nécessaires à la transformation du raisin en vin telles que la chaptalisation, l'acidification ou la fermentation alcoolique. Pendant ces différentes opérations, l'opérateur doit prélever des échantillons gazeux et liquides afin de tester le bon déroulement de la vinification. Les conteneurs comprenant un mélange de vin et de dioxyde de soufre possèdent deux robinets distincts pour prélever les deux phases. Un robinet est disposé sur la partie supérieure du conteneur et prélève la partie gazeuse tandis qu'un robinet placé sur la partie inférieure du conteneur permet de soutirer la partie liquide. Le vin en phase de maturation est stocké dans des réservoirs ou des conteneurs de grand volume (500 à 1000 litres).

Certains conteneurs ne possèdent qu'un unique robinet pour prélever la phase liquide et la phase gazeuse. Il est alors nécessaire de retourner le conteneur pour prélever alternativement les deux phases. Retourner des conteneurs de volume important comporte de nombreux dangers en termes de sécurité, le pivotement des conteneurs crée des pressions et des efforts supplémentaires sur les parois du conteneur et au niveau des robinets de distribution, pouvant entraîner ainsi la casse du robinet ou son dysfonctionnement. Les mécanismes permettant de mettre en pivotement les conteneurs de grand volume nécessitent un investissement financier important et la mise en pivotement des conteneurs ralentit la cadence des mesures par l'opérateur. Les conteneurs comportant deux robinets nécessitent des raccords de longueur importante pour pouvoir atteindre aussi bien le robinet supérieur que le robinet inférieur. De plus, il doit être aménagé des zones de travail au niveau de chaque robinet pour pouvoir connecter les raccords.

Un autre inconvénient des robinets de l'art antérieur est la connexion entre le robinet et le raccord qui peut présenter des fuites de fluide toxique ou corrosif. Le dioxyde de soufre est une matière toxique et corrosive qui nécessite d'être manipulée avec précautions. Dans l'industrie, le dioxyde de soufre sert surtout pour la production de l'acide sulfurique. Du fait du raccord par vissage, des fuites peuvent survenir lors des opération de vidange ou de remplissage des conteneurs entraînant une mise en danger de l'opérateur.

Les robinets de l'art antérieur comportent un embout mâle fileté pour recevoir une enveloppe femelle se vissant sur l'embout mâle à l'aide d'un outil de serrage tel qu'une clé à molette ou une pince de serrage. Des joints d'étanchéité toriques sont agencés sur l'embout mâle et dans l'enveloppe femelle pour former un raccord étanche lors de leur assemblage. Pour réaliser l'assemblage, les demi raccords doivent être mis face à face en opposition puis vissés l'un dans l'autre, les joints sont alors l'un contre l'autre. L'enveloppe femelle est vissée à la main dans un premier temps, puis avec un moyen de serrage pour compléter la fixation. Le couplage et le découplage répété du raccord détériorent les joints d'étanchéité ainsi que le pas de vis de l'embout mâle. L'usure des joints créé des fuites au niveau du couplage ce qui est un danger pour l'opérateur. Le couplage des embouts mâle et femelle nécessite l'utilisation d'outils de serrage qui augmentent le temps de fixation et gênent l'utilisateur lors de la manipulation de produits toxiques et corrosifs.

Lorsque le couplage est établi, le remplissage en dioxyde de soufre de la cuve peut entraîner un refoulement partiel du vin de la cuve dans le raccord. Le raccord mâle comporte des traces du dit vin sur son embout. Après déconnexion du raccord, le dit raccord mâle est connecté à une autre cuve contenant un vin de nature différente. Lors de l'alimentation en dioxyde de soufre, des traces de vin sont entraînées dans la deuxième cuve. Des vins de différentes origines sont mélangés, le vin contenu dans la seconde cuve est alors contaminé et perd sa spécification ce qui entraîne la non commercialisation de la cuve entière. C'est pourquoi on a proposé de placer un clapet anti-retour dans le robinet. Cependant, le risque existe qu'en cas de changement de température et d'emprisonnement du vin à cause du clapet, il y ait de petites déflagrations.

L'invention vise à pallier au moins certains de tous ces inconvénients et à proposer un robinet pour conteneur de composé biphasique agencé de telle sorte qu'un unique robinet puisse distribuer la phase liquide et la phase gazeuse du composé et que la connexion soit réalisée sans outil ni joint.

Dans le domaine des fluides frigorigènes, on connaît des robinets contenant un plongeur pour la phase liquide.

Ainsi, l'invention concerne un équipement de robinetterie pour composé biphasique, comprenant un robinet et des moyens de raccordement à une installation d'utilisation et un clapet anti-retour, le robinet comportant des moyens de distribution de la phase liquide, des moyens de distribution de la phase gazeuse, un plongeur de transmission de la phase liquide et un raccord mâle agencé pour être raccordé à un raccord femelle de l'équipement destiné à communiquer avec l'installation, les deux raccords formant un raccord dit rapide et le clapet anti-retour étant disposé dans le raccord femelle.

L'invention est remarquable notamment par le fait que le robinet se raccorde à l'installation d'utilisation par un raccord rapide, ainsi que par le montage du clapet anti-retour non plus dans le robinet lui-même mais dans le raccord en espèce, sa partie femelle, sans risque, ni de déflagration, ni de mélange inopiné de liquide. On notera que l'invention a procédé à une intégration d'un raccord rapide au robinet et d'une soustraction du clapet anti-retour au robinet.

L'invention permet d'accéder aux deux phases du composé par un unique orifice de sortie. On peut soutirer les phases liquide et gazeuse sans retourner le conteneur. Le prélèvement des différentes phases est alors facilité et donc plus rapide. Les conteneurs de grand volume ne sont plus retournés et permettent donc d'éviter les chocs ainsi que des modifications de la pression, ce qui pourraient fragiliser le robinet de l'équipement.

La connexion réalisée par un raccord rapide assure une étanchéité de la connexion et une manipulation du composé sans risque.

L'invention sera mieux comprise à l'aide de la description suivante, en référence au dessin annexé sur lequel :
- la Figure 1 est une vue, partiellement en coupe, du robinet de l'invention muni d'un bouchon ;
- la Figure 2 est une vue, partiellement en coupe, du raccord femelle du raccord rapide du robinet de la Figure 1;
- la Figure 3 est une vue, partiellement en coupe, du raccord mâle du raccord rapide du robinet de la Figure 1
et la Figure 4 est une vue, partiellement en coupe, du raccord femelle couplé au raccord mâle du robinet.

L'équipement de robinetterie, qui va maintenant être décrit, comporte un corps 1 et un orifice de sortie mâle 2, cet orifice mâle 2 se couplant à un raccord femelle 4.

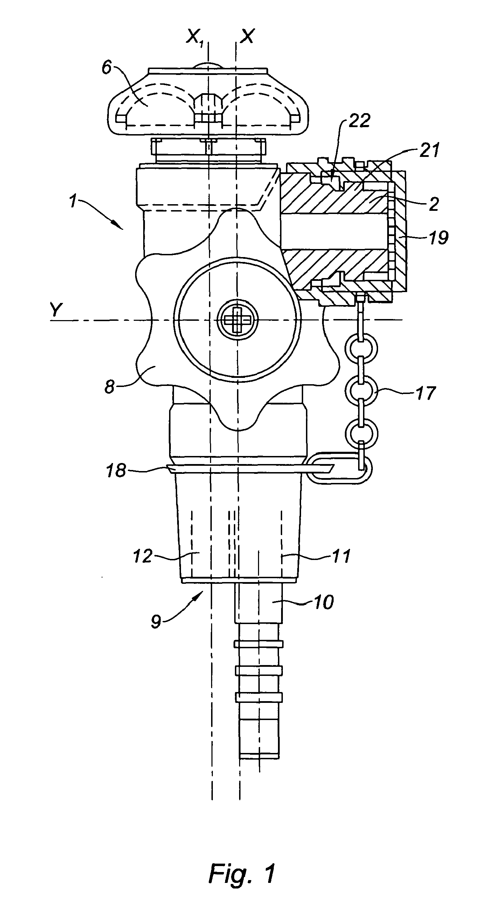

Comme représenté sur la figure 1, le corps du robinet 1 comporte trois étages cylindriques désaxés, l'étage supérieur supporte un volant de distribution pour la phase gazeuse 6 rotatif par rapport à l'axe xl. Le deuxième étage, désaxé par rapport au premier, supporte un volant de distribution pour la phase liquide 8 rotatif selon l'axe passant par le centre du volant et perpendiculaire au plan défini par les axes orthogonaux (x,y). L'orifice de sortie mâle est disposé latéralement sur le deuxième étage du corps du robinet. Un bouchon 19 recouvre l'orifice de sortie mâle, ce bouchon 19 est lié à une chaînette 17 maintenue au niveau du corps du robinet au moyen d'une attache chaînette 18. Un corps double phase constitue l'étage inférieur du corps 1 du robinet. Ce corps double phase comprend un orifice pour la phase gazeuse 9 et un plongeur de transmission de la phase liquide 11 prolongé à son extrémité par une canule 10.

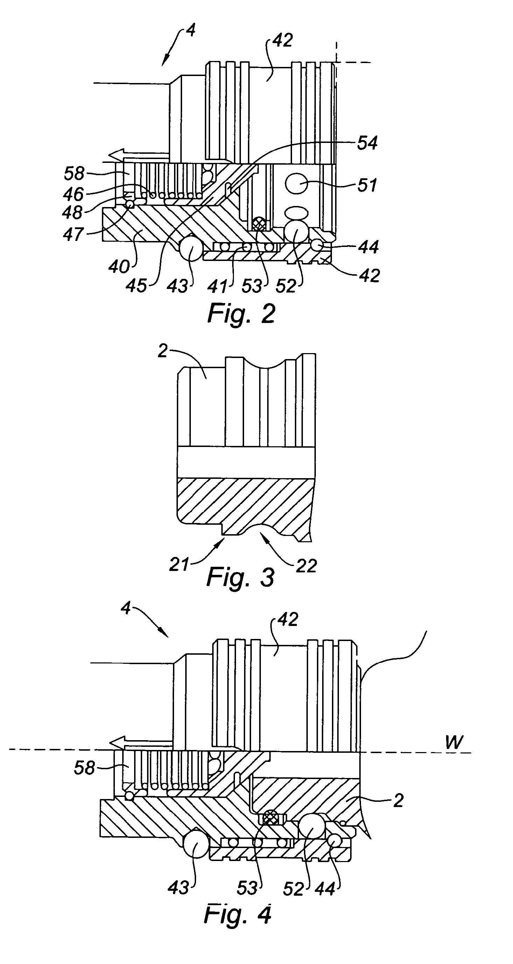

Comme présenté sur les figures 1 et 3, l'orifice de sortie mâle 2, situé sur le deuxième étage du robinet, comporte un corps cylindrique étagé possédant un épaulement annulaire 21 sur son enveloppe extérieure suivi d'un rétrécissement annulaire 22 formant ainsi une rainure de maintien.

Le raccord femelle 4, comme présenté sur la figure 2, possède un corps cylindrique étagé. Une douille de sécurité 42 de forme annulaire recouvre l'extrémité du corps du raccord femelle 40. La douille de sécurité 42 est sécurisée par une bille de maintien 43 et un jonc de retenue 44. Un ressort de douille 41 est situé entre le corps du raccord femelle 40 et la douille de sécurité 42. A l'extrémité du raccord femelle 4, sous la douille de sécurité 42, des orifices 51 sont aménagés sur la circonférence du corps 40 du raccord femelle. Ces orifices sont agencés pour correspondre avec des billes de verrouillage 52 placées entre la douille de sécurité 42 et le corps du raccord 40.

Le raccord femelle possède un clapet anti-retour 45 maintenu par une tige 58 sur laquelle est enroulé un ressort hélicoïdal 46. Le ressort hélicoïdal 42 est supporté à sa base par une rondelle de butée 48. Cette rondelle 48 est supportée par un jonc de retenue annulaire 47 qui maintient ensemble le ressort hélicoïdal 46 avec la rondelle de butée. Un joint plat du clapet 54 est placé entre le clapet 45 et le corps du raccord femelle 40.

Pour extraire la phase liquide du conteneur, le volant de distribution de la phase liquide 8 est actionné en rotation ce qui fait remonter le liquide à travers la canule 10 et le plongeur de transmission de la phase liquide 11 sous la pression de la phase gazeuse. La phase liquide est guidée dans le corps biphase 12 jusqu'à l'orifice de sortie mâle 2.

Pour extraire la phase gazeuse du conteneur, le volant de distribution de la phase gazeuse 6 est actionné en rotation ce qui fait remonter le gaz sous pression à travers l'orifice 9. La phase gazeuse est ensuite guidée dans le corps biphase 12 jusqu'à l'orifice de sortie 2.

L'orifice de sortie 2 permet de se raccorder à une installation d'utilisation pour vidanger ou remplir le conteneur.

La connexion du raccord femelle avec le raccord mâle est réalisée en deux temps. Tout d'abord, le raccord femelle 4 est amené sur le corps du raccord mâle 2. Ensuite, la douille de sécurité est tournée selon l'axe de raccordement W, les billes de verrouillage 52 se déplacent et se logent dans les orifices 51 pour se bloquer entre la douille 42 et le rétrécissement annulaire 22 du raccord mâle comme présenté sur la figure 4. Le raccord femelle 4 est ainsi verrouillé en translation selon l'axe de raccordement W. Le joint torique 53 assure l'étanchéité de la connexion au niveau de la douille.

Lors de la vidange de la phase gazeuse ou de la phase liquide, le clapet anti-retour 45 situé dans le raccord femelle est poussé par le composé sortant. Le ressort 46 est comprimé jusqu'à la rondelle de butée 47 et le clapet anti-retour 45 laisse passer le composé dans le conteneur lié au raccord femelle 4.

Lorsque la vidange est terminée, le clapet 45 revient à sa position d'origine et le joint plat de clapet 54 assure l'étanchéité au niveau du raccord femelle. Lors de la déconnexion du raccord, il est nécessaire de mettre la douille de sécurité 42 en rotation tout en compressant le ressort 41, cela permet de déverrouiller les billes des orifices 51 et de déconnecter les deux parties du raccord.

Bien entendu, on a décrit un volant de distribution mais cela aurait pu être une manette de distribution. De même, des billes de verrouillages ont été décrites mais un verrouillage à baïonnette pourrait convenir.

## Revendications

1. Equipement de robinetterie pour composé biphasique, comprenant un robinet et des moyens de raccordement à une installation d'utilisation et un clapet anti-retour (45), le robinet comportant des moyens de distribution de la phase liquide (8), des moyens de distribution de la phase gazeuse (6), un plongeur de transmission de la phase liquide (11) et un raccord mâle (2) agencé pour être raccordé à un raccord femelle (4) de l'équipement destiné à communiquer avec l'installation, les deux raccords formant un raccord dit rapide et le clapet anti-retour (45) étant disposé dans le raccord femelle (4).

2. Equipement selon la revendication 1 tel que le raccord femelle (4) comprend des moyens de verrouillage (52) pour sécuriser le raccord.

3. Equipement selon la revendication 1 dans lequel le plongeur de transmission de la phase liquide (11) est terminé par une canule (10).
